# EUROPEAN PATENT APPLICATION

(11) **EP 2 008 883 A1**
(43) Date of publication of application: **31.12.2008**
(21) Application number: 07012805.3
(22) Date of filing: 29.06.2007
(51) Int. Cl.: B60R 21/34, B60R 13/08

(54) **Top engine cover mount**

(71) Applicant: Rieter Technologies AG, 8406 Winterthur (CH)
(72) Inventor: Godano, Philippe, Pierre, 8400 Winterthur (CH); Simon, David, 78000 Versailles (FR)
(74) Representative: Van Adrichem Geisseler, Johanna

(57) **Abstract**

A vehicle top engine cover mount (1) to securely connect a top engine cover (2) to a vehicle engine (3). This mount (1) comprises at least a stud (5) and at least an interface (6) interacting with this stud (5). This mount (1) is arranged alongside of the vehicle engine (3) in order to increase the deformation distance (D) for achieving a HIC-value of less than 800. This mount (1) forms a releasable snap-fit (10) and further comprises a vibration decoupling element (7).

## Description

Present invention is concerned with a vehicle top engine cover mount to securely connect a top engine cover to a vehicle engine.

Top engine covers are placed above a vehicle's engine for acoustic and design reasons and are well known in the art. Such top covers commonly comprise a rather rigid carrier layer and a sound absorbing foam or fibres layer. Unfortunately, these rather soft acoustic layers do not contribute to crash energy absorption but consume a lot of free space suitable for such crash energy absorption means.

In order to provide engine top covers with the ability to absorb crash energy it is known to equip the rigid carrier layer with elastic mountings which allow to take up some of the crash energy. Known examples of such top engine covers are disclosed e.g. in FR-2'879'537 or FR-2'852'941. Unfortunately, these top covers consume most of the free space between the engine bonnet and the engine or aggregates on top of the engine. This space is defining the distance which allows an elastic and/or inelastic deformation for crash energy absorption and is restricted by the dimensions of the vertical mounts of the engine cover on top of the engine and/or its aggregates. The areas around these mounts are therefore profoundly undesired and are called "hard points'. The deformation distance between the bonnet and the crash relevant hard points created by the engine cover mounts is critical for achieving a low HIC value (Head Injury Criteria).

Today's mount designs are not satisfying because of their extensive space consuming dimension and the fact that these mounts are acting as hard points.

It is therefore an object of present invention to design an top engine cover mount which allows to increase the hard point free space between the engine bonnet and the hard points created by the top engine cover mounts, in order to allow a reduction of the HIC-value (Head Injury Criteria) and/or to Improve the PIP value (Pedestrian Impact Protection).

It is a further object of present invention to design a vibration decoupling top engine cover mount which allows an easy attaching and removing of the engine cover for exchange and/or maintenance work.

These objects are achieved by a vehicle top engine cover mount comprising the features of claim 1. In particular these objects are achieved by a vehicle top engine cover mount which is suitable to securely connect a top engine cover to a vehicle engine, which mount comprises at least a stud and at least an interface interacting with this stud, whereby this mount is forming a releasable snap-fit and comprises a vibration decoupling element, and whereby this mount is arranged sidewise of the vehicle engine and below hard points created by the engine and/or its aggregates, in order to achieve a HIC value of less than 800. It is understood that either the stud or the interface is attached to the top engine cover while the corresponding interface or stud is attached to the vehicle engine.

Further embodiments of the top engine cover mount in accordance with the invention comprise the features of the dependant claims.

A preferred embodiment of the mount is characterised in that the vibration decoupling element is part of the stud.

In a further embodiment the interface comprises an open slit with one or more bearing cavities in order to form a mono-step or multi-step snap-fit.

In a particularly preferred embodiment, the interface additionally comprises a collapsible element, which allows absorbing crash energy.

It goes without saying that the top engine cover may comprise a passive pedestrian crash energy absorbing pad and/or an acoustic absorber.

In general, the invention preferably consists in a mount comprising studs whereby the studs are arranged horizontally instead of vertically, and having their tips below the hard points of the engine. The interfaces are preferably integrated in the side flanges of the top engine cover and are realized by an open slit with flexible walls and with a bearing cavity to locate the stud. A further slit and a further bearing cavity may be added on top of the previous one for achieving a dual-step snap-fit in order to additionally absorb pedestrian crash energy. With the absence of studs between the upper surface of the engine and the top engine cover a space free of hard points is created. This space can be used for an acoustic and/or crash energy absorbing pad. It is understood that the flexible walls of the slit can be realized with any elastic material and/or with an appropriate geometry of the slits wall. This elastic material may consist either of a separate insert or of a bi-component injection moulding part. Alternatively, the studs may be coated with an elastic material. Furthermore the studs may simply extend in a horizontal direction or may have a L-shape with the tip portion extending in a vertical direction.

The invention is described in more detail by the following and with reference to the drawings, wherein:
- Fig. 1:: shows a schematic section view of an engine bay with a top engine cover mounted in accordance with the state of the art;
- Fig. 2:: shows a schematic section view of an engine bay with a top engine cover mounted in accordance with the invention;
- Fig. 3a:: shows a schematic section view of an engine bay with a top engine cover mounted in accordance with a further embodiment of the invention;
- Fig 3b:: shows a schematic top view of the embodiment shown in Fig 3a;
- Fig. 4:: shows a schematic sectional view of a mono-step decoupling interface;
- Fig. 5:: shows a schematic sectional view of a dual-step decoupling interface;
- Fig. 6:: shows a schematic sectional view of a further embodiment of a mono-step decoupling interface;
- Fig. 7:: shows a schematic sectional view of a further embodiment of a dual-step decoupling interface;
- Fig. 8a:: shows a schematic longitudinal sectional view of a preferred embodiment of a collapsible decoupling interface.
- Fig. 8b:: shows a schematic cross sectional view of the embodiment shown in Fig. 8a.

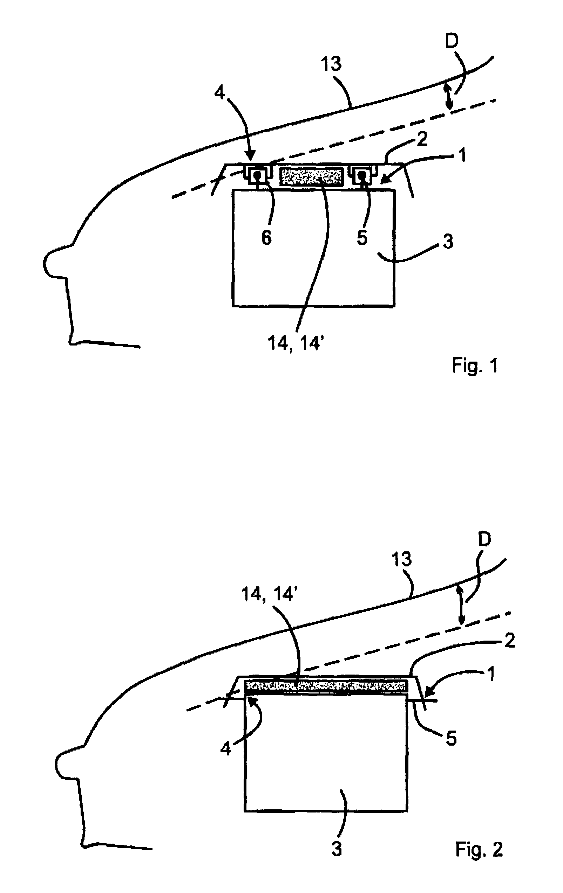

The schematic sectional view of an engine bay as shown in Fig. 1 illustrates the geometric arrangement of known vehicle's engine top covers. The engine bay underneath a motor bonnet 13 of a conventional motor vehicle is accommodating an engine 3. This engine 3 comprises on its top side various aggregates, in particular an air filter or an intake pipe. An engine top cover 2 is mounted on top of the engine 3. Studs 5 are carrying this engine top cover 2 via suitable interfaces 6. Preferred embodiments are comprising an additional acoustic package 14 in between the top cover 2 and the engine 3 and its aggregates. In case of a pedestrian impact the available space for deformations is defined by the distance D between the motor bonnet 13 and the hard points 4, i.e. the studs 5. This free space is sometimes used for crash absorbing elements, in particular passive crash absorbing elements made of collapsible material as well as for active crash absorbing elements such as air bags.

Fig. 2 shows schematically the arrangement of the mounts 1 in accordance with the invention. This figure makes clear that the studs 5 according to the invention are arranged sidewise of the vehicle's engine 3 and having their tip below the hard points 4. Therewith the deformation distance D between the bonnet 13 and the hard point 4 is substantially increased compared to the distance D of the state of the art arrangements. This increase of the deformation distance D allows achieving a HIC-value of less than 800. The top engine cover mount 1 will be described in more details later on. Since the crash energy absorbing pad 14 and/or the sound energy absorbing pad 14' comprise compressible, i.e. collapsible and/or elastic material, these pads may be arranged between the top engine cover 2 and the engine 3 without reducing the deformation distance D.

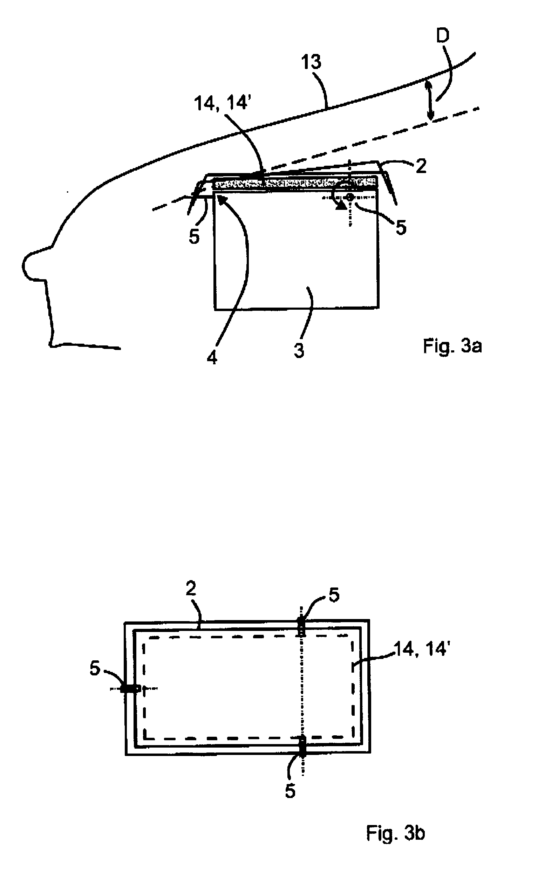

Fig. 3a shows schematically the arrangement of the studs 5 in accordance with a further embodiment of the invention. In accordance with the invention the studs 5 are arranged sidewise of the vehicle's engine 3 whereby two of them are arranged alongside and one of them is arranged at the front side. All of the studs have their tip below the hard point of the engine 3. The two studs 5 which are arranged alongside define a rotational axis and form a pivot, which allows the engine cover 2 to turn around. This is illustrated more clearly in Fig. 3b. It is advantageous to use a mount at the front side with a dual-step snap-fit. In a preferred embodiment the studs 5 are affixed at the engine 3, while the interfaces 6 comprising the snap-fit are part of the engine cover 2. Of course the studs 5 may be part of the engine cover 2, while the interfaces 6 with the snap-fit are affixed to the engine 3.

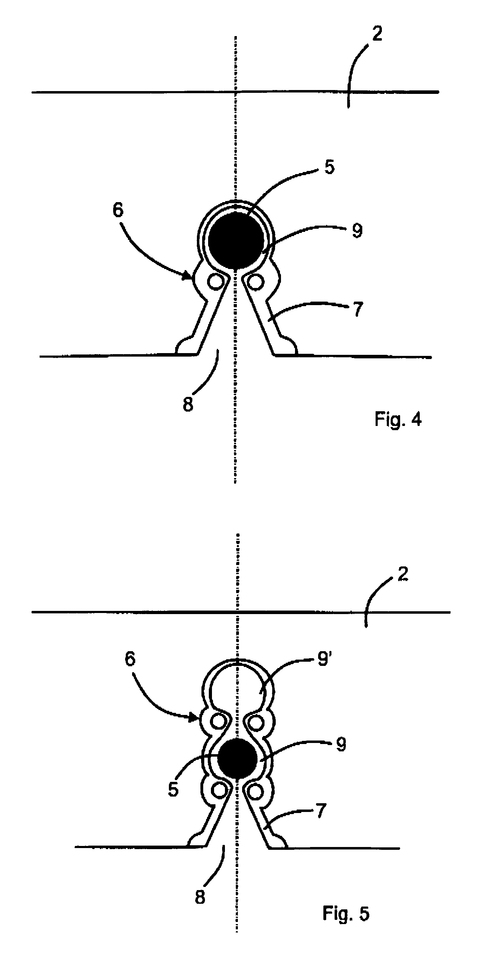

Fig. 4 illustrates a suitable interface 6 with a releasable snap-fit which is integrated into the engine cover 2 and is comprising a slit 8 and a bearing cavity 9. A stud 5 is fitting closely into the bearing cavity 9. In a preferred embodiment this slit 8 and the bearing cavity 9 is bordered by an elastic material, which forms a vibration decoupling element 7. Therewith the vibrations generated by the running vehicle's engine are not forthright transferred to the engine cover 2 but substantively attenuated. Due to the flexibility and/or the geometry of the interface 6 and this elastic vibration decoupling element 7 it is easy to attach and to remove the engine cover 2. This elastic vibration decoupling element 7 may be formed as an insert 12 or may be bonded to the engine cover 2 by an injection moulding process.

Fig. 5 illustrates a further embodiment of the interface 6 shown in Fig. 4. The interface 6 of this embodiment is modified to form a releasable dual-step snap-fit. This snap-fit as well is integrated into the engine cover 2 and comprises a slit 8 and two bearing cavities 9, 9'. A stud 5 is fitting closely into a first bearing cavity 9. This first bearing cavity 9 communicates with a second bearing cavity 9' via a passage arranged in line with the slit 8. In case that the engine cover 2 is pushed towards the engine 3 the fixed stud 5 will enter the second cavity 9' through the passage between the first bearing cavity 9 and the second bearing cavity 9'. Preferably the slit 8, the bearing cavities 9, 9' and the above mentioned passage are bordered by an elastic material, which forms a vibration decoupling element 7. The transfer of the vibrations generated by the running vehicle's engine to the engine cover 2 are substantively attenuated therewith. Due to the flexibility and/or the geometry of the interface 6 and this elastic vibration decoupling element 7 it is easy to attach and to remove the engine cover 2.

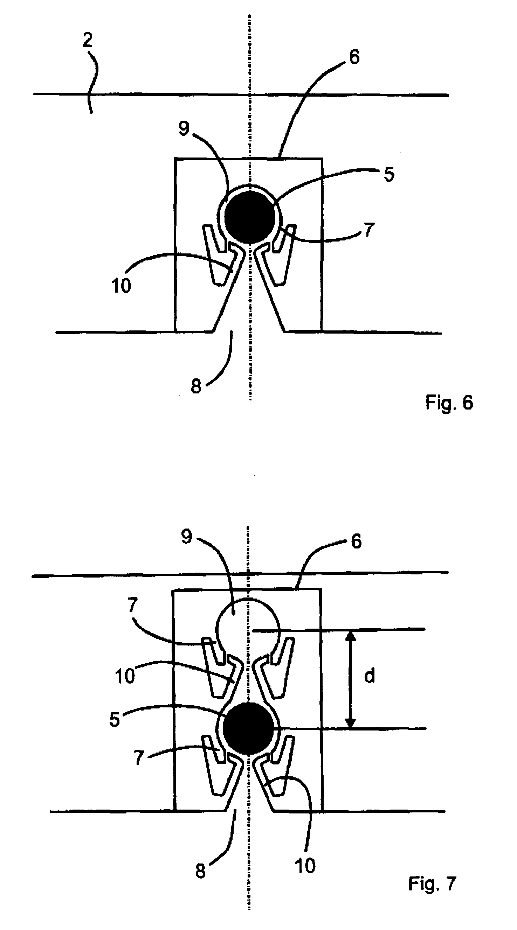

Fig. 6 illustrates a further embodiment of a suitable interface 6 forming a releasable mono-step snap-fit. This interface 6 is integrated into the engine cover 2 and may be formed as an insert or may be bonded to the engine cover 2 by an injection moulding process. This interface comprises a slit 8 with a bearing cavity 9 in its interior. Flexible snap-fit portions 10 ensure an easy attaching of the insert 6 to the stud 5 and an easy removing of the insert 6 from the stud 5. This facilitates the handling of the engine cover 2 in case of maintenance work. In addition resilient portions are acting as vibration decoupling element 7.

A modified embodiment of the interface 6 is shown in Fig. 7. This interface 6 comprises a slit 8 and two cavities which form a releasable dual-step snap-fit. These cavities are communicating with each other via a passage which is arranged in line with the slit 8. Both cavities comprise flexible snap-fit portions 10 to ensure an easy attaching of the insert 6 to and an easy removing of the insert 6 from the stud 5. These flexible snap-fit portions 10 facilitate the handling of the engine cover 2 in case of maintenance work. Additional resilient portions are acting as vibration decoupling element 7. In case that the engine cover 2 is pushed towards the engine the fixed stud 5 will enter the second cavity 9 through the passage between the first and the second bearing cavity what leads to a displacement of the engine cover 2 by a given distance d.

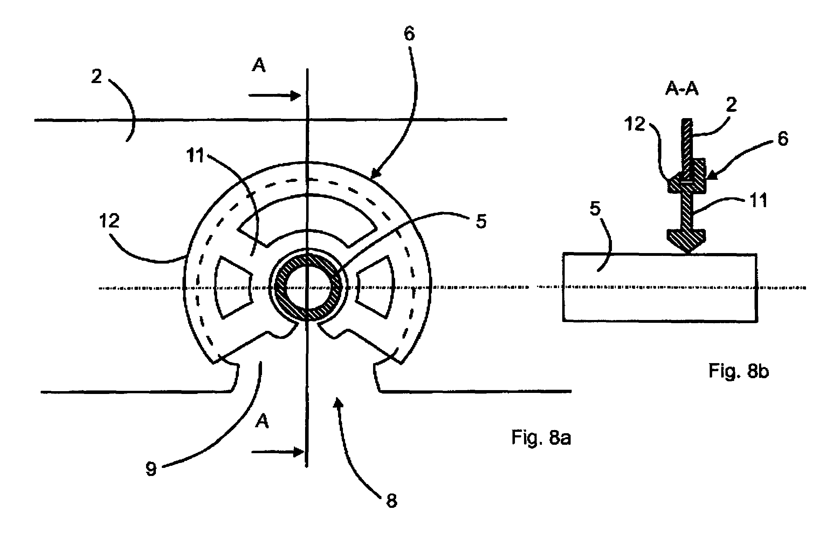

Fig. 8a and Fig. 8b illustrate a preferred embodiment of an insert element 6 in accordance with the invention. This interface 6 comprises a collapsible insert 12 which is provided with a slit 8 to accommodate a stud 5. This collapsible insert 12 comprises several collapsible struts 11 which are designed to absorb a maximum of crash energy in case that the engine cover 2 is pushed against the stud 5. Preferably the stud 5 stud comprises a vibration decoupling element 7, which may consist of a flexible portion or of an elastic portion, in particular a rubber hose. For the same purpose the stud 5 may also show a shape with a changing cross section. In order to increase the vibration insulation a plurality of hollow spaces may be incorporated within the interface 2 and/or the insert 12 and/or the stud 5. The stud 5 is preferably made of a steel, a rubber or a composite material.

The advantages of present invention are evident for the man skilled in the art and are to be seen in the removal of the hard points created by the top engine cover mounts, in the increase of the deformation distance and therewith the increase of the crash absorption capabilities and in the improved vibration and sound attenuation.

### References:

- 1:: top engine cover mount
- 2:: top engine cover
- 3:: vehicle engine
- 4:: hard point
- 5:: stud
- 6:: interface
- 7:: vibration decoupling element
- 8:: open slit
- 9:: bearing cavity
- 10:: flexible snap-fit portion
- 11:: collapsible struts
- 12:: insert
- 13:: bonnet
- 14:: crash energy absorbing pad
- 14':: sound energy absorbing pad
- D:: deformation distance
- d:: dual-step snap-fit distance

## Claims

1. Vehicle top engine cover mount (1) to securely connect a top engine cover (2) to a vehicle engine (3), which engine (3) creates crash relevant hard points (4), which mount (1) comprises at least a stud (5) and at least an interface (6) interacting with this stud (5), whereby this mount (1) forms a releasable snap-fit and comprises a vibration decoupling element (7) and whereby this mount (1) is arranged sidewise of the vehicle engine (3) and below the crash relevant hard points (4) created by the engine (3) in order to increase the deformation distance (D) for achieving a HIC value of less than 1000, preferable of less than 800.

2. Vehicle top engine cover mount (1) in accordance with claim 1, **characterised in that** the said stud (5) comprises a vibration decoupling element (7).

3. Vehicle top engine cover mount (1) in accordance with claim 2, **characterised in that** the vibration decoupling element (7) comprises a flexible portion.

4. Vehicle top engine cover mount (1) in accordance with claim 2, **characterised in that** the vibration decoupling element comprises an elastic portion, in particular a rubber hose.

5. Vehicle top engine cover mount (1) in accordance with claim 1, **characterised in that** the stud (5) comprises a shape with changing cross section.

6. Vehicle top engine cover mount (1) in accordance with claim 1, **characterised in that** the mount comprises several studs (5), in particular 2, 3 or 4 studs.

7. Vehicle top engine cover mount (1) in accordance with claim 1, **characterised in that** the stud (5) comprises hollow spaces in order to increase the vibration insulation.

8. Vehicle top engine cover mount (1) in accordance with claim 1, **characterised in that** the stud (5) is made of a steel, a rubber or a composite material.

9. Vehicle top engine cover mount (1) in accordance with claim 1, **characterised in that** the interface (6) comprises an open slit (8) and a bearing cavity (9) in order to form a mono-step snap-fit (10).

10. Vehicle top engine cover mount (1) in accordance with claim 1, **characterised in that** the interface (6) comprises an open slit (8) with two bearing cavities (9, 9') spaced from each other by a dual-step snap-fit distance (d) in order to form a dual-step snap-fit (10).

11. Vehicle top engine cover mount (1) in accordance with one of the claims 1, 9 or 10, **characterised in that** the interface (6) comprises a collapsible element (11).

12. Vehicle top engine cover mount (1) in accordance with one of the claims 1, 9 - 11, **characterised in that** the interface (6) comprises an elastic material in order to increase the vibration decoupling, in particular comprises rubber struts.

13. Vehicle top engine cover mount (1) in accordance with one of the claims 1, 8 - 12, **characterised in that** the interface (8) comprises an insert (12).

14. Vehicle top engine cover mount (1) in accordance with one of the claims 1, 9-13, **characterised in that** the interface (6) is bonded to the top engine cover (2) by bi-component injection moulding.

15. Vehicle top engine cover mount (1) in accordance with one of the claims 1, 9 - 14, **characterised in that** the interface (6) comprises a hollow profile.

16. Vehicle top engine cover mount (1) in accordance with one of the claims 1, 9 - 15, **characterised in that** the interface (6) comprises single or multiple struts.

17. Vehicle top engine cover mount (1) in accordance with one of the claims 1, 9 - 16, **characterised in that** the interface (6) comprises hollow spaces.

18. Vehicle top engine cover mount (1) in accordance with one of the preceding claims, **characterised in that** the top engine cover (2) is a product made by an injection moulding or a thermoforming process.

19. Vehicle top engine cover mount (1) in accordance with one of the preceding claims, **characterised in that** the top engine cover (2) comprises a reinforcement.

20. Vehicle top engine cover mount (1) in accordance with one of the preceding claims, **characterised in that** the top engine cover (2) is a product made of PP, PA, GF, CO, PES or a similar material.

21. Vehicle top engine cover mount (1) in accordance with one of the preceding claims, **characterised in that** the top engine cover (2) comprises a passive pedestrian crash energy absorbing pad (14), in particular a honeycomb material, a foam or an embossed sheet.

22. Vehicle top engine cover mount (1) in accordance with one of the preceding claims, **characterised in that** the top engine cover (2) comprises an sound energy absorbing pad (14'), in particular a felt or felt assembly, a thermoformable foam or an injected foam.

23. Vehicle top engine cover mount (1) in accordance with claim 22, **characterised in that** the felt comprises cotton, GF or PES material.
